(19) Europäisches Patentamt
European Patent Office
Office européen des brevets

(11) Numéro de publication: **0 206 893**
**B1**

(12) **FASCICULE DE BREVET EUROPÉEN**

(45) Date de publication du fascicule du brevet: **06.12.89**

(51) Int. Cl.⁴: **C 08 F 10/00**, C 08 F 4/62, C 08 F 4/68

(21) Numéro de dépôt: **86401218.2**

(22) Date de dépôt: **05.06.86**

(54) **Procédé de préparation d'une composante de métal de transition pour un système catalytique de polymérisation d'oléfines.**

(30) Priorité: **12.06.85 FR 8508908**

(43) Date de publication de la demande: **30.12.86 Bulletin 86/52**

(45) Mention de la délivrance du brevet: **06.12.89 Bulletin 89/49**

(84) Etats contractants désignés: **AT BE DE FR GB IT NL SE**

(56) Documents cité:
**EP-A-0 127 530**
**DE-A-2 950 437**

**Le dossier contient des informations techniques présentées postérieurement au dépôt de la demande et ne figurant pas dans le présent fascicule.**

(73) Titulaire: **ATOCHEM, 4 & 8, Cours Michelet La Défense 10, F-92800 Puteaux (FR)**

(72) Inventeur: **Brun, Claude, Clos Saint Pierre Idron, F-64320 Bizanos (FR)**
Inventeur: **Lacombe, Jean- Loup, 24 Avenue Montilleul Résidence Estibert, F-64000 Pau (FR)**

(74) Mandataire: **Foiret, Claude, ATOCHEM Département Propriété Industrielle, F-92091 Paris la Défense 10 Cédex 42 (FR)**

**EP 0 206 893 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé de préparation d'une composante de métal de transition pour un système catalytique de polymérisation d'oléfines. Elle se rapporte encore au système catalytique renfermant ladite composante et concerne également un procédé de synthèse d'un polymère ou copolymère oléfinique faisant appel audit système catalytique.

On sait que l'on peut produire des polymères ou copolymères oléfiniques de hautes masses moléculaires et à faible taux de cendres en polymérisant ou copolymérisant des oléfines telles que l'éthylène et ses homologues supérieurs, notamment propène, butène-1, pentène-1, méthyl-4 pentène-1, hexène-1, octène-1, au moyen de systèmes catalytiques de type Ziegler-Natta résultant de l'association d'une composante de métal de transition avec un cocatalyseur consistant le plus souvent en un composé hydrocarbylaluminium ou hydrocarbylmagnésium. La composante de métal de transition est généralement obtenue en associant un composé de métal de transition, notamment un composé de titane tel que $TiCl_4$, $TiCl_3$ ou un titanate d'alcoyle, avec un composé de magnésium, en particulier un composé renfermant $MgCl_2$, et éventuellement un composé organique donneur d'électrons et le cas échéant un support poreux organique ou inorganique.

On connait un procédé de préparation d'une telle composante de métal de transition, qui consiste à former, tout d'abord, un produit de réaction, ou complexe, organo-magnésium-aluminium soluble dans les hydrocarbures par réaction, dans un hydrocarbure inerte, d'un dialcoylmagnésium ou d'un halogénure de magnésium alcoyle avec un alcoylaluminium ou encore un composé aluminoxane, puis à soumettre le produit de réaction obtenu à une chloration par HCl et enfin à traiter le produit solide résultant de cette chloration, qui renferme $MgCl_2$, par un composé de métal de transition tel qu'un titanate d'alcoyle.

En étudiant le schéma réactionnel précité, qui aboutit à la composante de métal de transition, la demanderesse a trouvé que l'on pouvait obtenir des résultats améliorés en remplaçant par un dérivé d'aluminosiloxane, tel que défini ci-après, le composé alcoylaluminium ou aluminoxane mis en réaction avec le composé dialcoylmagnésium ou halogénure de magnésium alcoyle pour former le produit de réaction, ou complexe, organo-magnésium-aluminium-silicium.

En effet, l'utilisation du dérivé d'aluminosiloxane conduit à une composante de métal de transition plus active, qui confère une plus grande activité et une meilleure aptitude à la copolymérisation au système catalytique résultant de l'association de cette composante à un cocatalyseur. En outre le dérivé d'aluminosiloxane est moins réactif que le composé alcoylaluminium et de ce fait sa manipulation est plus facile. Par rapport au composé aluminoxane tel que décrit et illustré dans le EP-A-125 530, il présente l'avantage de conduire à des produits de polymérisation possédant une répartition moléculaire plus étroite.

Le procédé suivant l'invention pour la préparation d'une composante de métal de transition pour un système catalytique de polymérisation d'oléfines est du type dans lequel on forme un produit de réaction organo-magnésium-aluminium-silicium par réaction, dans un milieu liquide, d'un composé mono-halogéné, alcoylé ou alcoxylé de magnésium avec un composé organo-aluminium-silicium, puis on soumet le produit de réaction à une chloration et à un traitement par un composé d'un métal de transition choisi parmi Ti, V, Zr et Cr, et il se caractérise en ce qu'à titre de composé organo-aluminium-silicium on utilise au moins un dérivé d'aluminosiloxane de formule générale

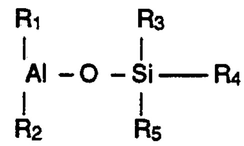

dans laquelle $R_1$, $R_2$, $R_3$, $R_4$, $R_5$ identiques ou différents représentent un radical alcoyle en $C_1$ à $C_{12}$ et mieux en $C_1$ à $C_6$, ou encore l'hydrogène sachant que de préférence il n'y a pas plus de trois atomes d'hydrogène par mole de dérivé.

Le composé de magnésium, qui est mis en réaction avec le dérivé d'aluminosiloxane, répond habituellement à la formule Ya $Mg_m$ Xb dans laquelle Y désigne un radical alcoyle ou alcoxy en C1 à $C_{12}$, et de préférence en $C_1$ à $C_8$, X représente un radical Y ou un atome d'halogène, et de préférence un atome de chlore, m est un nombre égal ou supérieur à 1, et a est un nombre supérieur à 0 et tel que $a + b = 2$ m.

Des exemples de tels composés sont notamment le chlorure de magnésium éthyle, chlorure de magnésium butyle, di n-butylmagnésium, di isobutylmagnésium, di n-hexylmagnésium, di n-octylmagnésium, et $(C_4H_9)_3Mg_2(C_2H_5)$.

La réaction entre le composé de magnésium de formule Ya $Mg_m$ Xb et le dérivé d'aluminosiloxane est effectuée dans un milieu liquide inerte vis-à-vis des réactifs ou encore en l'absence d'un tel milieu si l'un au moins desdits réactifs est un liquide. Ledit milieu inerte peut consister notamment en un hydrocarbure aliphatique tel que pentane, heptane ou hexane, en un hydrocarbure aromatique tel que benzène, toluène, xylène, ou encore en un hydrocarbure cycloaliphatique tel que cyclohexane ou méthylcyclohexane. La température utilisée pour cette réaction n'est pas critique et peut varier par exemple de -40°C à la température d'ébullition à pression atmosphérique du milieu liquide employé. Les proportions du composé de magnésium de formule Ya $Mg_m$ Xb et du dérivé d'aluminosiloxane, que l'on fait réagir l'un sur l'autre, sont avantageusement telles que le rapport du nombre de moles du composé de magnésium au nombre de mole du composé aluminosiloxane dans le milieu réactionnel

est compris entre 0,1 et 100 et se situe de préférence entre 0,5 et 20.

Suivant l'invention, le produit organo-magnésium-aluminium-silicium résultant de la réaction entre le composé Ya $Mg_m$ Xb et le dérivé d'aluminosiloxane est ensuite soumis à une chloration et à un traitement avec un composé d'un métal de transition choisi parmi Ti, V, Zr et Cr.

L'ordre dans lequel s'effectue la chloration et le traitement avec le composé de métal de transition n'est pas critique. On peut par exemple soumettre le produit de réaction organo-magnésium-aluminium-silicium à une chloration, puis traiter le produit résultant de la chloration par le composé de métal de transition. On peut encore opérer dans l'ordre inverse, c'est-à-dire traiter le produit organo-magnésium-aluminium-silicium par le composé de métal de transition, puis soumettre le produit résultant à une chloration.

La chloration peut être mise en oeuvre par mise en contact du produit à chlorer directement avec un agent de chloration; toutefois pour obtenir une homogénéité satisfaisante, il est préférable d'effectuer la chloration dans un milieu liquide inerte, qui peut être similaire à celui employé pour préparer le produit de réaction organo-magnésium-aluminium-silicium. La température utilisée pour la chloration n'est pas critique, et peut varier, par exemple de 0°C à 100°C. Comme agents de chloration conviennent notamment le chlore, les hydrocarbures halogénés tels que chlorure de tertiobutyle, chlorobenzène, chloroéthane, 1-2 dichloroéthane, ou encore $SOCl_2$, $SiCl_4$, et de préférence HCl anhydre. La quantité d'agent de chloration est telle que le rapport du nombre d'atomes de chlore fourni par l'agent de chloration au nombre d'atomes de magnésium du composé Ya $Mg_m$ Xb mis en réaction avec le dérivé d'aluminosiloxane est supérieur à 2, et en particulier compris entre 2 et 100.

Le traitement par le composé de métal de transition du produit organo-magnésium-aluminium-silicium ou du produit correspondant résultant de la chloration, est également mis en oeuvre avantageusement dans un milieu liquide inerte, qui est en particulier analogue à celui utilisé pour la chloration ou pour la préparation du composé organo-magnésium-aluminium-silicium. Ledit traitement est réalisé à une température, qui peut varier assez largement et se situe en particulier entre -30°C et 200°C et de préférence entre 0°C et 150°C. Pour ce traitement conviennent de préférence les composés de Ti, V, Zr et Cr choisi parmi $TiCl_4$, $TiCl_3$, $VCl_4$, $VOCl_3$, $CrCl_3$, $CrO_3$, acétylacétonate de vanadium, acétylacétonate de chrome, $Ti(OR)_p$ Cl(4-p) et $Zr(OR)_pCl(4-p)$, R désignant un radical alcoyle en $C_1$ à $C_8$ et p étant un nombre entier allant de 1 à 4. Il est possible de réaliser en une seule étape la chloration et le traitement par le composé de métal de transition, en choisissant comme agent de chloration un chlorure de Ti, V, Zr ou Cr et notamment $TiCl_4$.

Suivant une forme de mise en oeuvre particulière du procédé suivant l'invention, la préparation de la composante de métal de transition est réalisée en présence d'un support poreux inorganique ou organique. Le support poreux inorganique peut être choisi par exemple dans le groupe formé par $SiO_2$, $Al_2O_3$, $TiO_2$, $ZrO_2$, les zéolithes, et les oxydes mixtes renfermant $SiO_2$ et un ou plusieurs oxydes métalliques pris parmi $ZrO_2$, $TiO_2$, MgO et $Al_2O_3$.

Le support polymère poreux organique à l'état divisé peut être choisi parmi les poudres de polymères thermoplastiques présentant une porosité et une granulométrie convenables, lesdits polymères étant de préférence exempts de groupements réactifs susceptibles de réagir avec le composé de magnésium et/ou le composé de métal de transition ou de conduire à des réticulations pouvant entraîner une dégradation des propriétés du support.

Des supports polymères préférés sont constitués de poudres de polymères thermoplastiques tels que polystyrène et tout particulièrement polyoléfines comme polyéthylène haute densité, polyéthylène basse densité radicalaire, polypropylène, copolymères d'éthylène et d'une ou plusieurs alpha-oléfines en $C_3$ à $C_{12}$.

Le support peut être incorporé au produit de réaction entre le composé de magnésium et le dérivé d'aluminosiloxane, ladite incorporation pouvant se faire soit lors de la formation du milieu de réaction entre lesdits composés, soit au cours de la réaction, ou encore lorsque la réaction de production du composé organo-magnésium-aluminium-silicium est terminée. Dans le cas où l'on traite le produit organo-magnésium-aluminium-silicium, résultant de la réaction entre le composé de magnésium Ya $Mg_m$ Xb et le dérivé d'aluminosiloxane, par un composé de métal de transition puis soumet le produit résultant à une chloration, le support peut être incorporé au milieu issu du traitement du composé organo-magnésium-aluminiumsilicium par le composé de métal de transition avant l'étape de chloration. Par contre, lorsque l'on soumet le produit organo-magnésium-aluminium-silicium à une chloration puis traite le produit résultant de cette chloration par un composé de métal de transition, on dissout le produit résultant de la chloration dans un solvant, par exemple tétrahydrofuranne ou encore alcool tel que méthanol, et imprègne le support au moyen de la solution obtenue, puis l'on traite le support imprégné par le composé de métal de transition. On peut encore associer le support, par cobroyage ou par mélangeage en suspension dans un liquide inerte, au produit obtenu à l'issue de celles des étapes de chloration et de traitement par le composé de métal de transition, qui est la dernière dans le processus. On peut enfin dissoudre le produit obtenu à l'issue de ladite dernière étape, dans un solvant, notamment tétrahydrofuranne ou alcool tel que méthanol, et imprégner le support à l'aide de la solution résultante.

Un donneur d'électrons consistant en une base de Lewis ou un composé accepteur d'électrons peut être également associé à la composante de métal de transition. Ceci peut être réalisé directement par mélangeage à l'issue de la

préparation de ladite composante. On peut encore incorporer le donneur d'électrons ou l'accepteur d'électrons à la composante de métal de transition en un point quelconque du processus d'obtention de cette dernière, et en particulier au cours de l'étape de réaction du composé de magnésium Ya $Mg_m$ Xb avec le dérivé d'aluminosiloxane ou à l'issue de ladite étape et avant l'étape ultérieure, qui peut être suivant le cas l'étape de chloration, l'étape de traitement par le composé de métal de transition, ou encore l'étape d'addition du support.

Le donneur d'électrons peut être un composé mono ou polyfonctionnel avantageusement choisi parmi les acides carboxyliques aliphatiques ou aromatiques et leurs esters alcoyliques, les éthers aliphatiques ou cycliques, les cétones, les esters vinyliques, les dérivés acryliques, en particulier acrylates ou méthacrylates d'alcoyle, et les silanes. Conviennent notamment comme donneurs d'électrons les composés tels que paratoluate de méthyle, benzoate d'éthyle, acétate d'éthyle ou de butyle, éther éthylique, paraanisate d'éthyle, dibutylphtalate, dioctylphtalate, diisobutylphtalate, tétrahydrofuranne, dioxane, acétone, méthylisobutylcétone, acétate de vinyle, méthacrylate de méthyle, et phényltriéthoxysilane.

L'accepteur d'électrons est un acide de Lewis, choisi de préférence parmi le chlorure d'aluminium, le trifluorure de bore, le chloranile ou encore les alcoylaluminiums et alcoylmagnésiums.

Dans la préparation de la composante de métal de transition, le composé de métal de transition est utilisé en quantité telle que ladite composante renferme en particulier 0,01 % à 40 %, et de préférence 0,1 % à 20 %, en poids de métal de transition.

Lorsque le support est utilisé, sa proportion peut représenter 5 % à 99,5 %, et de préférence 40 % à 85 %, du poids de la composante de métal de transition le contenant.

La quantité du donneur d'électrons, éventuellement présent, peut varier assez largement. Elle se situe avantageusement dans un intervalle tel que le rapport du nombre d'atomes de magnésium de la composante de métal de transition au nombre de molécules de donneur d'électrons soit compris entre 0,5 et 200 et de préférence entre 1 et 100.

La quantité d'accepteur d'électrons, éventuellement présent, peut varier assez largement. Elle se situe avantageusement dans un intervalle tel que le rapport molaire accepteur sur magnésium de la composante de métal de transition soit compris entre 0,01 et 200 et de préférence 0,1 à 50.

La composante de métal de transition, préparée comme indiqué précédemment, est utilisable en association avec un cocatalyseur choisi parmi les composés organométalliques des métaux des groupes I à III du Tableau Périodique des Eléments pour constituer un système catalytique approprié pour la polymérisation des oléfines.

Le cocatalyseur, associé à la composante de métal de transition, est choisi en particulier parmi les composés organomagnésium de formule Ya $Mg_m$ Xb, l'isoprénylaluminium, les aluminoxanes, les dérivés d'aluminosiloxane définis précédemment et les composés organoaluminium de formule $Al(R')_qMrHs$ dans laquelle M représente Cl ou OR', R' désigne un radical alcoyle en $C_1$ à $C_{16}$, et de préférence en $C_1$ à $C_{12}$, tandis que q, r et s sont des nombres tels que $1 \leq q \leq 3$, $0 \leq r \leq 2$ et $0 \leq s \leq 2$ avec $q + r + s = 3$. De préférence le cocatalyseur est choisi parmi l'isoprénylaluminium, les composés organomagnésium de formule Ya $Mg_m$ Xb et les composés organoaluminium de formule $A1R'''_xCl(3\text{-}x)$, dans laquelle R''' désigne un radical alcoyle en $C_1$ à $C_8$ et x un nombre tel que $1 \leq x \leq 3$. Des exemples de ces composés sont tels que triéthylaluminium, tri isopropylaluminium, tri isobutylaluminium, tri n-hexylaluminium, tri n-octylaluminium, chlorure de diéthylaluminium, isoprénylaluminium, dibutylmagnésium, di n-hexylmagnésium.

La composante de métal de transition et le cocatalyseur sont associés dans des proportions telles que le rapport du nombre d'atomes de métal des groupes I à III du Tableau Périodique des Eléments contenu dans le cocatalyseur au nombre d'atomes de métal de transition de ladite composante se situe entre 0,5 et 1000 et de préférence entre 1 et 400.

Le système catalytique peut être préformé, par mise en contact de la composante de métal de transition avec le cocatalyseur, avant d'être amené au contact des oléfines à polymériser. On peut également ajouter la composante de métal de transition et le cocatalyseur séparément dans la zone de polymérisation des oléfines pour former le système catalytique in situ.

Que la composante de métal de transition renferme ou non un donneur d'électrons, on peut ajouter un tel composé choisi parmi les donneurs d'électrons définis précédemment, au système catalytique résultant de l'association du cocatalyseur avec la composante de métal de transition ou encore au cocatalyseur avant la mise en contact de ce dernier avec la composante de métal de transition pour former le système catalytique, ou bien mettre en contact simultanément le donneur d'électrons avec les deux autres composantes du système catalytique. La quantité de donneur d'électrons est avantageusement telle que le rapport du nombre d'atomes de métal des groupes I à III du Tableau Périodique des Eléments, et notamment d'aluminium ou de magnésium, issus du cocatalyseur au nombre de molécules de donneur d'électrons se situe entre 1 et 50.

Les oléfines susceptibles d'être polymérisées ou copolymérisées au moyen du système catalytique résultant de l'association de la composante de métal de transition suivant l'invention avec le cocatalyseur et éventuellement un donneur d'électrons tels que définis plus haut, incluent non seulement les hydrocarbures en $C_2$ à $C_{18}$ présentant une insaturation éthylénique unique, et en particulier les mono oléfines en $C_2$ à $C_{18}$ telles qu'éthylène, propène, butène-1, pentène-1,

hexène-1, méthyl-4, pentène-1, octène-1, décène-1, dodécène-1, tridécène-1, hexadécène-1, octadécène-1, mais encore les diènes conjugués ou non conjugués, notamment butadiène, isoprène, hexadiène-1,4, hexadiène-1,5, vinylnorbornène, éthylidènenorbornène.

Le système catalytique précité est tout particulièrement utilisable pour la polymérisation des mono-oléfines en $C_2$ à $C_{12}$, comme par exemple éthylène, propène, butène-1 et hexène-1.

On peut notamment polymériser une mono oléfine unique en $C_2$ à $C_{12}$, par exemple éthylène, propène, butène-1, hexène-1, au contact du système catalytique en vue de produire l'homopolymère correspondant à cette mono oléfine.

On peut encore polymériser des mélanges d'au moins deux oléfines en $C_2$ à $C_{12}$ au contact dudit système catalytique, en vue de produire des copolymères desdites oléfines. On peut notamment polymériser des mélanges d'éthylène et d'une ou plusieurs alphaoléfines en $C_3$ à $C_{12}$ lesdits mélanges, lorsqu'ils sont au contact du système catalytique, renfermant une proportion molaire globale d'alpha-oléfines en $C_3$ à $C_{12}$ compris entre 0,1 et 90 % et de préférence entre 1 et 60 %.

On peut également polymériser des mélanges de propène avec l'éthylène et/ou une ou plusieurs alpha-oléfines en $C_4$ à $C_{12}$, lesdits mélanges, lorsqu'ils sont au contact du système catalytique, renfermant une proportion molaire globale d'éthylène et/ou d'alphaoléfines en $C_4$ à $C_{12}$ comprise entre 0,1 et 90 % et de préférence entre 1 et 60 %.

On peut encore polymériser des mélanges d'éthylène et de propène, avec ou sans autres alpha-oléfines ou dioléfines, tels que le rapport molaire éthylène: propène soit compris entre 0,02 et 50 et de préférence entre 0,05 et 1.

La polymérisation des oléfines précitées, et en particulier des mono oléfines en $C_2$ à $C_{12}$ prises seules ou en mélanges, comme indiqué plus haut, au moyen du système catalytique défini précédemment peut être mise en oeuvre en solution ou en suspension dans un milieu liquide inerte, et notamment dans un hydrocarbure aliphatique tel que n-heptane, n-hexane, isobutane, ou encore en masse dans l'une au moins des oléfines à polymériser maintenue à l'état liquide ou hypercritique.

Les conditions opératoires, notamment températures, pressions, quantité de système catalytique, pour ces polymérisations en phase liquide sont celles, qui sont habituellement proposées pour des cas similaires faisant appel à des systèmes catalytiques conventionnels de type Ziegler Natta supporté ou non.

Par exemple pour une polymérisation conduite en suspension ou en solution dans un milieu liquide inerte, on peut opérer à des températures allant jusqu'à 250°C et sous des pressions allant de la pression atmosphérique à 250 bars. Dans le cas d'une polymérisation en milieu propène liquide, les températures peuvent aller jusqu'à 250°C et les pressions peuvent être comprises entre la pression atmosphérique et 50 bars. Pour une polymérisation ou copolymérisation de l'éthylène en masse conduisant à des polyéthylènes ou à des copolymères majoritaires en éthylène, on peut opérer à des températures allant jusqu'à 350°C et sous des pressions pouvant être comprises entre 200 à 3500 bars.

Le système catalytique obtenu par association de la composante de métal de transition suivant l'invention avec un cocatalyseur et éventuellement un donneur d'électrons tels que définis plus haut, peut être encore utilisé pour la polymérisation en phase gazeuse des oléfines ou des mélanges d'oléfines, qui viennent d'être cités. En particulier on peut polymériser en phase gazeuse, au contact dudit système catalytique, un mélange d'éthylène et d'une ou plusieurs alphaoléfines en $C_3$ à $C_{12}$ telles que propène, butène-1, hexène-1, méthyl-4 pentène-1 et octène-1, renfermant, lorsqu'il est au contact du système catalytique, une proportion molaire de l'alpha-oléfine ou des alpha-oléfines en $C_3$ à $C_{12}$ comprise entre 0,1 et 90 %, et de préférence entre 1 et 60 %, en vue de produire un copolymère éthylène/alphaoléfine à teneur minoritaire en alpha-oléfine en $C_3$ à $C_{12}$, connu sous le nom de polyéthylène linéaire basse densité.

La polymérisation en phase gazeuse de l'oléfine ou des oléfines au contact du système catalytique peut être effectuée dans tout réacteur permettant une polymérisation en phase gazeuse et en particulier dans un réacteur à lit agité ou à lit fluidisé. Les conditions de mise en oeuvre de la polymérisation en phase gazeuse, notamment température, pression, injection de l'oléfine ou des oléfines dans le réacteur à lit agité ou à lit fluidisé, contrôle de la température et de la pression de polymérisation, sont analogues à celles proposées dans l'art antérieur pour le polymérisation en phase gazeuse des oléfines. On opère généralement à une température inférieure au point de fusion Tf du polymère ou copolymère à synthétiser, et plus particulièrement comprise entre -20°C et (Tf-5)°C, et sous une pression telles que l'oléfine ou les oléfines, et éventuellement les autres monomères hydrocarbonés présents dans le réacteur soient essentiellement en phase vapeur.

La polymérisation en solution, en suspension, en masse, ou en phase gazeuse peut être réalisée en présence d'un agent de transfert de chaînes, notamment hydrogène ou encore alcoyl zinc tel que zinc diéthyle, de manière à contrôler l'indice de fusion du polymère ou copolymère à produire. L'agent de transfert de chaînes préféré est l'hydrogène, que l'on utilise en quantité pouvant aller jusqu'à 80 %, et se situant de préférence entre 0,1 et 40 % du volume de l'ensemble oléfines et hydrogène amené au réacteur.

La composante de métal de transition suivant l'invention peut encore être utilisée comme composante de métal de transition pour la préparation du solide hydrocarboné actif, utilisable pour polymériser des oléfines, tel que défini dans le FR-A-2 541 683.

La composante de métal de transition suivant l'invention peut également être utilisée pour la préparation d'un prépolymère actif, qui est utilisable seul ou en association avec un cocatalyseur choisi parmi les composés de magnésium de formule Ya $Mg_m$ Xb, l'isoprénylaluminium, les aluminoxanes, les dérivés d'aluminosiloxane, définis par la formule donnée plus haut et les composés organoaluminium de formule $Al(R')_qM_rH_s$, pour former un système catalytique utilisable pour la polymérisation ou copolymérisation en masse de l'éthylène conduisant à des polyéthylènes homopolymères ou à des copolymères majoritaires en éthylène comme les copolymères d'éthylène et d'une ou plusieurs alpha-oléfines en $C_3$ à $C_{12}$ connus sous le nom de polyéthylènes linéaires basse densité, en opérant sous des pressions allant de 200 à 3500 bars et de préférence de 800 à 2500 bars et à des températures allant jusqu'à 350°C.

Ledit prépolymère actif est obtenu en mettant en contact une ou plusieurs alpha-oléfines en $C_4$ à $C_{12}$ avec un système catalytique formé en associant la composante de métal de transition suivant l'invention avec un cocatalyseur choisi parmi les composés cités plus haut dans ce but et employés dans les proportions indiquées précédemment, ladite oléfine ou lesdites oléfines en $C_4$ à $C_{12}$ étant utilisées en quantité représentant 2 à 100 moles et de préférence 2 à 50 moles de l'oléfine ou des oléfines en $C_4$ à $C_{12}$ par atome gramme de métal de transition de la composante de métal de transition.

L'invention est illustrée par les exemples suivants donnés à titre non limitatif.

**Exemple 1**

**a) - Préparation de la composante de métal de transition:**

On opère dans un réacteur de 1 litre équipé d'un dispositif d'agitation et muni d'une double enveloppe parcourue par un fluide caloporteur pour le maintien du réacteur en température.

Dans le réacteur purgé par circulation d'azote, on introduit 35 ml d'une solution de $(C_4H_9)_3$ $Mg_2$ $(C_2H_5)$ (DBME) dans l'heptane (25 mM) et 25 mM de diéthylaluminium diméthyl éthylsiloxane, on obtient une solution qui est maintenue sous agitation à 80°C pendant 4 heures. Après refroidissement à la température ambiante, on ajoute 1 g de dioctylphtalate et on agite 18 heures.

La solution est soumise à une chloration par injection d'HCl anhydre (0,5 mole/heure pendant 1 heure) au contenu du réacteur. On obtient un précipité, que l'on sépare par filtration et remet en suspension dans l'heptane. A la suspension obtenue on ajoute 10 ml de $TiCl_4$ pur, puis maintient le milieu réactionnel sous agitation pendant 3 heures à température ambiante. Le contenu du réacteur est alors lavé, filtré et la fraction solide recueillie est séchée, à 70°C sous couvrant d'azote.

Le solide obtenu, qui constitue la composante de métal de transition suivant l'invention, renferme, en poids, 10 % de Mg, 0,4 % de Ti et 0,9 % Si.

**b) - Polymérisation de l'éthylène en suspension au contact d'un système catalytique obtenu à partir de la composante de métal de transition:**

On opère dans un réacteur muni d'un agitateur tournant avec une vitesse de rotation de 350 tours/minute, ledit réacteur est maintenu à 80°C pendant toute la durée de la polymérisation.

Dans le réacteur agité, après séchage et purge à l'azote, on introduit successivement 2,0 l d'heptane sec, 6 millimoles de tri éthylaluminium (cocatalyseur) et 100 mg de la composante de titane. On injecte alors dans le réacteur 5,4 bars d'$H_2$ et 5,4 bars d'éthylène, et maintient ensuite la pression à l'intérieur du réacteur par injection additionnelle d'éthylène. Après 1 heure de réaction, on arrête la polymérisation par décompression du réacteur puis addition au contenu de ce dernier de 20 ml d'un mélange de méthanol et d'HCl à 10 % en poids d'HCl, et l'on recueille le polyéthylène formé par filtration du milieu réactionnel.

L'influence du catalyseur dans la polymérisation est résumée dans le tableau en fin d'exemple 3.

**Exemple 2**

On répète l'exemple précédent, mais le dioctylphtalate est remplacé par 1 g de chloranile.

Le solide obtenu renferme en poids:

10,2 % de Mg, 0,54 % de Ti et 0,9 % Si.

Toujours dans les conditions de l'exemple 1 on effectue la polymérisation de l'éthylène. L'influence du catalyseur dans la polymérisation est résumée dans le tableau en fin d'exemple 3.

**Exemple 3**

On opère dans un réacteur de 1 litre équipé d'un dispositif d'agitation et muni d'une double enveloppe parcourue par un fluide caloporteur pour le maintien du réacteur en température.

Dans le réacteur purgé par circulation d'azote, on introduit 35 ml d'une solution de DBME dans l'heptane (25 mM) et 25 de diéthylaluminium diméthyl éthylsiloxane. On obtient une solution, qui est agitée à 80°C durant 4 heures. Après refroidissement à la température ambiante, la solution est soumise à une chloration par injection d'HCl anhydre (0,5 mole/heure pendant 1 heure) au contenu du réacteur. On obtient un précipité, que l'on sépare par filtration et remet en suspension dans l'heptane. A la suspension obtenue on ajoute 10 ml de $TiCl_4$ pur, puis maintient le milieu réactionnel sous agitation pendant 3 heures à température ambiante. Le contenu du réacteur est alors filtré et lavé par de l'heptane. Après nouvelle filtration le solide est séché à 70°C sous courant d'azote. Le solide obtenu qui constitue la composante de métal de transition renferme en poids; 17,2 % de Mg, 2,7 % Si et 0,6 % de Ti.

Dans les conditions de l'exemple 1 on procède à la polymérisation de l'éthylène. L'influence du catalyseur dans la polymérisation est résumée dans le tableau suivant.

| | Activité | M F R | Densité |
|---|---|---|---|
| Exemple 1 | 3000 | 33 | 0,960 |
| Exemple 2 | 4500 | 32 | 0,954 |
| Exemple 3 | 7500 | 29 | 0,958 |

Activité = g de polymère produit par gramme de composante de titane et par heure

M F R (Melt Flow Ratio) = Rapport entre l'indice de fusion MI 21,6/190°C et l'indice de fusion MI 2,16/190°C

MI = Indice de fusion determiné suivant la norme ASTM 1238

**Exemple 4**

**a) - Préparation d'une composante de métal de transition sur support polymère**

On opère dans un réacteur de 1,5 litre équipé d'un dispositif d'agitation et muni d'une double enveloppe parcourue par un fluide caloporteur pour le maintien du réacteur en température.

Dans le réacteur séché et maintenu sous atmosphère d'azote, on introduit 50 g d'une poudre séchée et dégazée à l'azote, de polyéthylène basse densité linéaire, ladite poudre présentant un diamètre moyen de particules égal à 230 microns et un volume poreux de 0,2 $cm^3$/g.

Au contenu du réacteur maintenu sous agitation à 40°C on ajoute 25 mM de

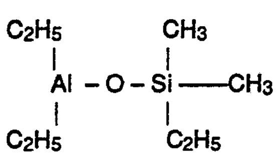

en solution dans 10 cc d'heptane.

Après 1/4 heure d'homogénéisation on soumet le contenu pulvérulent du réacteur à un balayage d'azote pour éliminer l'hexane. On ajoute ensuite 5,5 de dibutylmagnésium en solution dans 8cc d'hexane. Après 1/4 heure d'homogénéisation on soumet le contenu du réacteur à un balayage d'azote pour éliminer l'hexane. On ajoute dans le réacteur 1 mMole de tétra n-propyltitanate ($Ti(OR)_4$) en solution dans 10cc d'heptane. Après 1/4 heure d'homogénéisation on soumet le contenu pulvérulent du réacteur à un balayage d'azote pour éliminer l'heptane. On ajoute dans le réacteur 0,1 Mole de $SiCl_4$ et on maintient l'agitation pendant 1 heure.

On procède à un lavage par introduction de 100cc d'heptane suivi d'une filtration.

On refroidit le réacteur à température ambiante et toujours sous agitation on procède à la chloration du mélange par injection d'HCl anhydre à raison de 0,6 mole/heure pendant 60 minutes. L'HCl n'ayant pas réagi étant élimini par balayage à l'azote.

On ajoute enfin dans le réacteur sous agitation 75 mMole de tri n-hexylaluminium dissous dans 6cc d'heptane. Après 1/4 d'heure d'homogénéisation on soumet le contenu du réacteur à un balayage d'azote pour éliminer l'heptane.

On obtient alors un produit pulvérulent formant une composante de métal de transition, ledit produit ayant la granulométrie de la poudre de polymère support de départ et renfermant en poids 725 ppm Ti, 2520 ppm de Mg, 1830 ppm Al et 690 ppm Si.

**b) - Polymérisation**

On effectue des essais de préparation de copolymères éthylène/butène1, en phase gazeuse en présence du système catalytique.

La copolymérisation est effectuée dans un réacteur agité de 8 l contenant 100 g de charge de polyéthylène dégazé et purgé à l'azote.

On introduit successivement à 85°C sous agitation:

2 bars absolus de butène-1
1cc de trihexylaluminium (THA) pur
1,5 bar absolu de $H_2$
13,5 bars d'éthylène

Le catalyseur est introduit dans le réacteur sous agitation avec 4 bars absolus d'azote pour atteindre une pression totale de 21 bars absolus. La réaction démarre aussitôt et la pression est maintenue constante en alimentant le réacteur avec un mélange butène-l/éthylène de 0,0466 Mole.

**c) - Conditions opératoires**

| | |
|---|---|
| Poids de catalyseur utilisé en g | 5 |
| Charge de polyéthylène dans réacteur en g | 100 |
| Cocatalyseur injecté (cc de THA pur) | 1 |
| Durée de polymérisation en heures | 4 |

**d) - Résultats de polymérisation**

| | |
|---|---|
| Copolymère produit en g | 771 |
| Productivité gPE/g cata | 154 |
| Productivité gPE/g Ti | 211000 |

| | |
|---|---|
| Masse volumique apparente (Mva) non tassée en g/$cm^3$ | 0,30 |
| Diamètre des particules à 50 % de la courbe de répartition cumulée (Dp 50) en microns | 1130 |
| $MI_2$ | 1,4 |
| MFR = $\frac{MI\ 21,6}{MI\ 2,16}$ | 28,2 |
| Densité | 0,922 |
| Nombre de branchements éthyls pour 1000 Carbone ($C_2H_5$/1000 C) | 18,1 |

**Revendications**

1. Procédé pour la préparation d'une composante de métal de transition pour un système catalytique de polymérisation d'oléfines, dans lequel on forme un produit de réaction organo-magnésium-aluminium par réaction, dans un milieu liquide, d'un composé mono-halogéné, alcoylé ou alcoxylé de magnésium avec un composé organoaluminium, puis on soumet le produit de réaction à une chloration et à un traitement par un composé d'un métal de transition choisi parmi Ti, V, Zr et Cr, caractérisé en ce qu'à titre de composé organoaluminium on utilise au moins un dérivé d'aluminosiloxane de formule

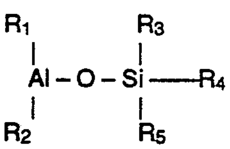

dans laquelle $R_1$, $R_2$, $R_3$, $R_4$, $R_5$, identiques ou différents représentent un radical alcoyle en $C_1$ à $C_{12}$, ou l'hydrogène.

2. Procédé suivant la revendication 1 caractérisé en ce que le dérivé d'aluminosiloxane est tel que dans la formule le définissant $R_1$, $R_2$, $R_3$, $R_4$, $R_5$ représentent un radical alcoyle en $C_1$ à $C_6$.

3. Procédé suivant l'une des revendications 1 à 2 caractérisé en ce que le dérivé d'aluminosiloxane ne contient pas plus de deux atomes d'hydrogène par mole de dérivé.

4. Procédé suivant l'une des revendications 1 à 3, caractérisé en ce que le composé de magnésium répond à la formule $Y_a Mg_m X_b$, dans laquelle Y désigne un radical alcoyle ou alcoxy en $C_1$ à $C_{12}$, et de préférence en $C_1$ à $C_8$, X représentant un radical Y ou un atome d'halogène, et de préférence un atome de chlore, m est un nombre égal ou supérieur à 1 tandis que a est un nombre supérieur à 0 et tel que $a + b = 2m$.

5. Procédé suivant l'une des revendications 1 à 4, caractérisé en ce que les quantités du composé de magnésium et du dérivé d'aluminosiloxane mis en réaction sont telles que le rapport du nombre de moles du composé de magnésium au nombre de moles du dérivé d'aluminosiloxane soit compris entre 0,1 et 100 et se situe de préférence entre 0,5 et 20.

6. Procédé suivant l'une des revendications 1 à 5, caractérisé en ce que la réaction entre le composé de magnésium et le dérivé d'aluminosiloxane est mise en oeuvre à une température allant de -40°C à la température d'ébullition à pression atmosphérique du milieu liquide de réaction.

7. Procédé suivant l'une des revendications 1 à 6, caractérisé en ce que le produit de réaction entre le composé de magnésium et le dérivé d'aluminosiloxane est soumis à une chloration, puis on traite le produit résultant de cette chloration par le composé de métal de transition.

8. Procédé suivant l'une des revendications 1 à 6, caractérisé en ce que le produit de réaction entre le composé de magnésium et le dérivé d'aluminosiloxane est traité par le composé de métal de transition, puis on soumet à une chloration le produit résultant de ce traitement.

9. Procédé suivant la revendication 7 ou 8, caractérisé en ce qu'un support poreux inorganique ou organique est imprégné d'un produit de réaction entre le composé de magnésium et le dérivé d'aluminosiloxane, ladite imprégnation étant réalisée soit lors de la formation du milieu de réaction entre lesdits composés, soit au cours de la réaction, ou encore lorsque la réaction est terminée.

10. Procédé suivant la revendication 7, caractérisé en ce que le produit résultant de la chloration est mis en solution dans un solvant, puis on imprègne un support poreux inorganique ou organique, à l'aide de cette solution et l'on traite le support imprégné par le composé de métal de transition.

11. Procédé suivant la revendication 8, caractérisé en ce qu'un support poreux inorganique ou organique est imprégné au milieu réactionnel issu du traitement par le composé de métal de transition, avant la chloration.

12. Procédé suivant la revendication 7 ou 8, caractérisé en ce que le produit obtenu à l'issue de celles des étapes de chloration et de traitement par le composé de métal de transition, qui est la dernière étape dans le processus, est associé, par cobroyage ou par mélangeage en suspension dans un liquide inerte, à un support poreux inorganique ou organique.

13. Procédé suivant la revendication 7 ou 8, caractérisé en ce que l'on dissout dans un solvant le produit obtenu à l'issue de celles des étapes de chloration et de traitement par le composé de métal de transition, qui est la dernière dans le

processus, et l'on imprègne un support poreux inorganique ou organique, à l'aide de ladite solution.

14. Procédé suivant l'une des revendications 9 à 13, caractérisé en ce que le support est choisi dans le groupe formé par $SiO_2$, $TiO_2$, $Al_2O_3$, $ZrO_2$, les zéolithes et les oxydes mixtes renfermant $SiO_2$ et un ou plusieurs oxydes métalliques pris parmi $ZrO_2$, $TiO_2$, MgO et $Al_2O_3$, et les polymères thermoplastiques.

15. Procédé suivant l'une des revendications 7 à 14, caractérisé en ce que la chloration est réalisée à une température allant de 0°C à 100°C.

16. Procédé suivant l'une des revendications 7 à 15, caractérisé en ce que l'agent de chloration est tel que chlore, hydrocarbure halogéné, $SOCl_2$, $SiCl_4$, et tout particulièrement HCl anhydre.

17. Procédé suivant l'une des revendications 7 à 16, caractérisé en ce que le traitement par le composé de métal de transition est réalisé à une température comprise entre -40°C et 200°C et de préférence entre 0°C et 150°C.

18. Procédé suivant l'une des revendications 7 à 17, caractérisé en ce que le composé de métal de transition utilisé pour le traitement est choisi parmi $TiCl_4$, $TiCl_3$, $VCl_4$, $VOCl_3$, $CrCl_3$, $CrO_3$, acétylacétonate de chrome, acétylacétonate de vanadium, et les titanates et zirconates de formules $Ti(OR)_pCl(4-p)$ et $Zr(OR)_pCl(4-p)$, avec R représentant un radical alcoyle en $C_1$ à $C_8$ et p désignant un nombre entier allant de 1 à 4.

19. Procédé suivant l'une des revendications 1 à 18, caractérisé en ce qu'un donneur d'électrons, consistant en une base de Lewis, est associé à la composante de métal de transition soit à l'issue de la préparation de cette dernière ou encore en un point quelconque de son processus d'obtention, et en particulier au cours de l'étape de réaction du composé de magnésium avec le dérivé d'aluminosiloxane ou à l'issue de ladite étape.

20. Procédé suivant la revendication 19, caractérisé en ce que la quantité de donneur d'électrons utilisée est telle que le rapport du nombre d'atomes de magnésium de la composante de métal de transition au nombre de molécules de donneur d'électrons soit compris entre 0,5 et 200 et de préférence entre 1 et 100.

21. Procédé selon l'une des revendications 1 à 18 caractérisé en ce qu'un accepteur d'électrons consistant en un acide de Lewis est associé à la composante de métal de transition soit à l'issue de la préparation de cette dernière ou encore en un point quelconque de son processus d'obtention, et en particulier au cours de l'étape de réaction du composé de magnésium avec le dérivé d'aluminosiloxane ou à l'issue de ladite étape.

22. Procédé selon la revendication 21 caractérisé en ce que la quantité d'accepteur d'électrons utilisée est telle que le rapport molaire accepteur sur magnésium de la composante de métal de transition soit compris entre 0,01 et 200 et de préférence 0,1 à 50.

23. Procédé suivant l'une des revendications 1 à 22, caractérisé en ce que la quantité du composé de métal de transition utilisé est telle que la composante de métal de transition renferme de 0,01 % à 40 %, et de préférence de 0,1 % à 20 %, en poids de métal de transition.

24. Système catalytique de polymérisation des oléfines résultant de l'association d'une composante de métal de transition à un cocatalyseur choisi parmi les composés organométalliques des métaux des groupes I à III du Tableau Périodique des Eléments, et éventuellement à un donneur d'électrons, caractérisé en ce que l'on utilise une composante de métal de transition obtenue suivant l'une des revendications 1 à 23.

25. Système catalytique suivant la revendication 24, caractérisé en ce que la composante de métal de transition et le cocatalyseur sont associés dans des proportions telles que le rapport du nombre d'atomes de métal des groupes I à III du Tableau Périodique des Eléments issus du cocatalyseur au nombre d'atomes de métal de transition contenus dans ladite composante se situe entre 0,5 et 1 000 et plus particulièrement entre 1 et 400.

26. Système catalytique suivant la revendication 24 ou 25, caractérisé en ce que le cocatalyseur est choisi parmi l'isoprénylaluminium, les aluminoxanes, les composés organomagnésium de formule Ya $Mg_m$ Xb, les composés organoaluminium de formule $A1R'''_xC1(3-x)$, dans laquelle R''' désigne un radical alcoyle en $C_1$ à $C_8$ et x est un nombre tel que $1 \leq x \leq 3$ et les dérivés d'aluminosiloxane de formule

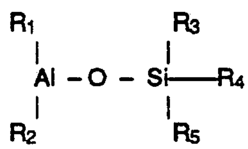

27. Système catalytique suivant la revendication 26, caractérisé en ce qu'il est formé d'un prépolymère actif obtenu en mettant en contact une ou plusieurs alpha-oléfines en $C_4$ à $C_{12}$ avec un système catalytique résultant de l'association de la composante de métal de transition avec un ou plusieurs desdits cocatalyseurs, avec utilisation de 2 à 100 moles, et de préférence de 2 à 50 moles, de l'alpha-oléfine ou des alpha-oléfines en $C_4$ à $C_{12}$ par atome gramme de métal de transition présent dans la composante de métal de transition, ou de l'association dudit prépolymère actif avec au moins l'un desdits cocatalyseurs.

28. Procédé de synthèse d'un polymère ou copolymère oléfinique par mise en contact d'une ou plusieurs oléfines avec un système catalytique résultant de l'association d'une composante de métal de transition avec un cocatalyseur, et éventuellement un donneur d'électrons, caractérisé en ce que le système catalytique utilisé est celui suivant l'une des revendications 24 à 27.

29. Procédé suivant la revendication 28, caractérisé en ce que la polymérisation est effectuée en solution ou suspension dans un milieu liquide inerte ou encore en masse dans l'une au moins des oléfines maintenue à l'état liquide.

30. Procédé suivant la revendication 28, caractérisé en ce que la polymérisation est effectuée en phase gazeuse.

31. Procédé suivant l'une des revendications 28 à 30, caractérisé en ce que l'oléfine ou les oléfines utilisées sont choisies parmi les mono oléfines en $C_2$ à $C_{12}$, et notamment parmi l'éthylène, le propène, le butène-1, et l'hexène-1.

32. Procédé suivant la revendication 30, caractérisé en ce que l'on polymérise un mélange d'éthylène et d'une ou plusieurs alphaoléfines en $C_3$ à $C_{12}$, notamment propène, butène-1, hexène-1, méthyl-4 pentène-1 et octène-1, ledit mélange renfermant, lorsqu'il est au contact du système catalytique, une proportion molaire d'alpha-oléfines en $C_3$ à $C_{12}$ comprise entre 0,1 et 90 %, et de préférence entre 1 et 60 %.

33. Procédé suivant la revendication 28, caractérisé en ce que l'on polymérise en masse, sous des pressions allant de 200 à 3500 bars et des températures allant jusqu'à 350°C, de l'éthylène ou un mélange d'éthylène et d'une ou plusieurs alpha-oléfines en $C_3$ à $C_{12}$.

34. Procédé suivant la revendication 33, caractérisé en ce que ladite polymérisation en masse est réalisée en faisant appel au système catalytique suivant la revendication 25.

## Patentansprüche

1. Verfahren zur Herstellung einer Übergangsmetallkomponente für ein katalytisches System zur Polymerisation von Olefinen bei dem man eine OrganoMagnesium-Aluminium-Verbindung als Reaktionsprodukt bildet, durch Reaktion einer mono-Halogen, Alkoyl- oder Alkoxylverbindung des Magnesiums mit einer Organo-Aluminium-Verbindung in einem flüssigen Medium, und man dann das Reaktionsprodukt einer Chlorierung sowie einer Behandlung mit einer Übergangsmetallverbindung ausgewählt aus Ti, V, Zr und Cr unterwirft, dadurch gekennzeichnet, daß man als Organo-Aluminium-Verbindung wenigstens ein Aluminosiloxan-Derivat der Formel

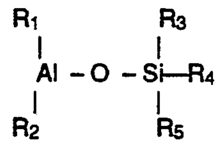

verwendet, in der $R_1$, $R_2$, $R_3$, $R_4$, $R_5$ identisch oder verschieden sind und jeweils einen Alkoylrest mit $C_1$ - $C_{12}$ oder Wasserstoff darstellen.

2. Verfahren nach Anspruch 1, dadurch gekennzeichnet, daß das Aluminosiloxan-Derivat ein solches ist, bei dem in der Formel, die dieses definiert $R_1$, $R_2$, $R_3$, $R_4$ und $R_5$ einen Alkoylrest mit $C_1$ - $C_6$ darstellen.

3. Verfahren nach einem der Ansprüche 1 bis 2, dadurch gekennzeichnet, daß das Aluminosiloxan-Derivat nicht mehr als zwei Wasserstoffatome pro Mol enthält.

4. Verfahren nach einem der Ansprüche 1 bis 3, dadurch gekennzeichnet, daß die Magnesium-Verbindung der Formel $Y_a\,Mg_m\,X_b$ entspricht, in der Y einen Alkoylrest oder Alkoxyrest mit $C_1$ bis $C_{12}$ darstellt, vorzugsweise mit $C_1$ bis $C_8$, X einen Rest Y oder ein Halogenatom darstellt, vorzugsweise ein Chloratom, m eine Zahl gleich oder größer als 1 ist, während a eine Zahl größer als 0 ist, so daß a + b 2 m ist.

5. Verfahren nach einem der Ansprüche 1 bis 4, dadurch gekennzeichnet, daß die Mengen der Magnesiumverbindung und des Aluminosiloxan-Derivats, die zur Reaktion gebracht werden, so gewählt sind, daß das Verhältnis der Anzahl der Mole der Magnesiumverbindung zur Anzahl der Mole des Aluminosiloxan-Derivats zwischen 0,1 und 100 liegt und vorzugsweise zwischen 0,5 und 20 liegt.

6. Verfahren nach einem der Ansprüche 1 bis 5, dadurch gekennzeichnet, daß die Reaktion zwischen der Magnesium-Verbindung und dem Aluminosiloxan-Derivat bei einer Temperatur zwischen -40°C und der Siedetemperatur des flüssigen Reaktionsmediums bei Atmosphärendruck durchgeführt wird.

7. Verfahren nach einem der Ansprüche 1 bis 6, dadurch gekennzeichnet, daß das Produkt der Reaktion zwischen der Magnesiumverbindung und dem Aluminosiloxan-Derivat einer Chlorierung unterworfen wird und man dann das bei dieser Chlorierung erhaltene Produkt mit der Übergangsmetallverbindung behandelt.

8. Verfahren nach einem der Ansprüche 1 bis 6, dadurch gekennzeichnet, daß das Reaktionsprodukt zwischen der Magnesium-Verbindung und dem Aluminosiloxan-Derivat mit der Übergangsmetall-Verbindung behandelt wird und man dann das bei dieser Behandlung erhaltene Produkt einer Chlorierung unterwirft.

9. Verfahren nach Anspruch 7 oder 8 dadurch gekennzeichnet, daß ein anorganischer oder organischer poröser Träger mit dem Produkt der Reaktion zwischen der Magnesium-Verbindung und dem Aluminosiloxan-Derivat imprägniert wird, wobei diese Imprägnierung entweder bei der Bildung des Reaktionsmediums aus den genannten Verbindungen durchgeführt wird oder im Verlauf der Reaktion oder wenn die Reaktion beendet ist.

10. Verfahren nach Anspruch 7, dadurch gekennzeichnet, daß das bei der Chlorierung erhaltene Produkt in einem Lösungsmittel in Lösung gebracht wird, man dann einen anorganischen oder organischen porösen Träger mittels dieser Lösung imprägniert und man dann den imprägnierten Träger mit der Übergangsmetall-Verbindung behandelt.

11. Verfahren nach Anspruch 8, dadurch gekennzeichnet, daß ein anorganischer oder organischer poröser Träger in dem Reaktionsmedium imprägniert wird, das bei der Behandlung mit der Übergangsmetallverbindung vor der Chlorierung erhalten wird.

12. Verfahren nach Anspruch 7 oder 8, dadurch gekennzeichnet, daß das am Ende desjenigen Chlorierungsschritts und Behandlungsschritts mit der Übergangsmetall-Verbindung, der den letzten Schritt bei dieser Behandlung darstellt, erhaltene Produkt durch gemeinsames Mahlen oder Mischen in Suspension in einer inerten Flüssigkeit auf einen porösen anorganischen oder organischen Träger aufgebracht wird.

13. Verfahren nach Anspruch 7 oder 8, dadurch gekennzeichnet, daß man das am Ende desjenigen der Schritte der Chlorierung und der Behandlung mit der Übergangsmetall-Verbindung, der den letzten Schritt bei dieser Behandlung darstellt, erhaltene Produkt in einem Lösungsmittel löst und einen anorganischen oder organischen porösen Träger mittels dieser Lösung imprägniert.

14. Verfahren nach einem der Ansprüche 9 bis 13, dadurch gekennzeichnet, daß der Träger aus der Gruppe bestehend aus $SiO_2$, $TiO_2$, $Al_2O_3$, $ZrO_2$, den Zeolithen und den gemischten Oxiden enthaltend $SiO_2$ oder ein oder mehrere Metalloxide aus $ZrO_2$, $TiO_2$, MgO und $Al_2O_3$, und den thermoplastischen Polymeren ausgewählt wird.

15. Verfahren nach einem der Ansprüche 7 bis 14, dadurch gekennzeichnet, daß die Chlorierung bei einer Temperatur zwischen 0°C und 100°C durchgeführt wird.

16. Verfahren nach einem der Ansprüche 7 bis 15, dadurch gekennzeichnet, daß das Chlorierungsmittel Chlor, ein halogenierter Kohlenwasserstoff, $SOCl_2$, $SiCl_4$ und insbesondere wasserfreies HCl ist.

17. Verfahren nach einem der Ansprüche 7 bis 16, dadurch gekennzeichnet, daß die Behandlung mit der Übergangsmetall-Verbindung bei einer Temperatur zwischen -40°C und 200°C und vorzugsweise zwischen 0°C und 150°C durchgeführt wird.

18. Verfahren nach einem der Ansprüche 7 bis 17, dadurch gekennzeichnet, daß die ÜbergangsmetallVerbindung, die für die Behandlung verwendet wird, ausgewählt wird aus $TiCl_4$, $TiCl_3$, $VCl_4$, $VOCl_3$, $CrCl_3$, $CrO_3$, Chromacetylacetonat, Vanadiumacetylacetonat und den Titanaten und Zirkonaten der Formel $Ti(OR)_pCl(4-p)$ und $Zr(OR)_pCl(4-p)$ in denen R einen Alkoylrest mit $C_1$ bis $C_8$ darstellt und p eine ganze Zahl von 1 bis 4 darstellt.

19. Verfahren nach einem der Ansprüche 1 bis 18, dadurch gekennzeichnet, daß ein Elektronen-Donor, bestehend aus einer Lewis-Base, mit der Übergangsmetall-Komponente entweder gegen Ende der Herstellung der Letzteren oder zu einem beliebigen Zeitpunkt des Verfahrens zu deren Herstellung kombiniert wird, und insbesondere während des Schritts der Reaktion der Magnesium-Verbindung mit dem Aluminosiloxan-Derivat oder am Ende dieses Schritts.

20. Verfahren nach Anspruch 19, dadurch gekennzeichnet, daß die Menge des eingesetzten Elektronen-Donors so gewählt ist, daß das Verhältnis der Anzahl der Magnesium-Atome der Übergangsmetall-Komponente zur Anzahl der Moleküle des Elektronen-Donors zwischen 0,5 und 200 und vorzugsweise zwischen 1 und 100 liegt.

21. Verfahren nach einem der Ansprüche 1 bis 18, dadurch gekennzeichnet, daß ein Elektronen-Akzeptor bestehend aus einer Lewis-Säure mit der Übergangsmetall-Komponente kombiniert wird, entweder am Ende der Herstellung der letzteren oder auch zu einem beliebigen Punkt in deren Herstellungsprozeß, insbesondere im Verlauf des Schritts der Reaktion der Magnesium-Verbindung mit dem Aluminosiloxan-Derivat oder am Ende dieses Schritts.

22. Verfahren nach Anspruch 21, dadurch gekennzeichnet, daß die Menge des Elektronen-Akzeptors, der verwendet wird so gewählt ist, daß das molare Verhältnis Akzeptor zum Magnesium der Übergangsmetall-Komponente zwischen 0,01 und 200 und vorzugsweise zwischen 0,1 und 50 liegt.

23. Verfahren nach einem der Ansprüche 1 bis 22, dadurch gekennzeichnet, daß die Menge der Übergangsmetall-Komponente, die verwendet wird, so gewählt ist, daß die Übergangsmetall-Komponente 0,01 % bis 40 % und vorzugsweise 0,1 % bis 20 Gew.-% Übergangsmetall enthält.

24. Katalytisches System zur Polymerisation von

Olefinen erhältlich aus der Kombination einer Übergangsmetall-Komponente mit einem Co-Katalysator ausgewählt aus den organometallischen Verbindungen der Metalle der Gruppen I bis III des Periodensystems der Elemente und gegebenenfalls einem Elektronen-Donor, dadurch gekennzeichnet, daß man eine Übergangsmetall-Komponente verwendet, die gemäß einem der Ansprüche 1 bis 23 erhalten wurde.

25. Katalytisches System nach Anspruch 24, dadurch gekennzeichnet, daß die Übergangsmetall-Komponente und der Co-Katalysator in solchen Anteilen kombiniert werden, daß das Verhältnis der Anzahl der Atome des Metalls der Gruppen I bis III des Periodensystems der Elemente aus dem Co-Katalysator zur Anzahl der Atome des Übergangsmetalls in dieser Komponente zwischen 0,5 und 1 000 und insbesondere zwischen 1 und 400 liegt.

26. Katalytisches System nach Anspruch 24 oder 25, dadurch gekennzeichnet, daß der Co-Katalysator ausgewählt wird aus Isoprenylaluminium, den Aluminoxanen, den Organo-Magnesium-Verbindungen der Formel $Y_a Mg_m X_b$, den Organo-Aluminium-Verbindungen der Formel $AlR'''_xCl_{(3-x)}$ in der R''' einen Alkoyl-Rest mit $C_1$ bis $C_8$ darstellt und x eine Zahl ist, so daß $1 \leq x \leq 3$ und den Aluminosiloxan-Derivaten der Formel

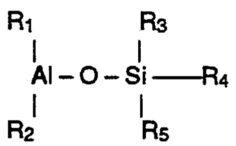

27. Katalytisches System nach Anspruch 26, dadurch gekennzeichnet, daß es aus einem aktiven Prepolymer gebildet wird, erhältlich durch in Kontakt bringen ein oder mehrerer alpha-Olefine mit $C_4$ bis $C_{12}$ mit einem katalytischen System erhältlich aus der Kombination einer Übergangsmetall-Komponente mit ein oder mehreren dieser Co-Katalysatoren, unter Verwendung von 2 bis 100 Molen und vorzugsweise 2 bis 50 Molen des alphaOlefins oder der alpha-Olefine mit $C_4$ bis $C_{12}$ pro Gramm Atom des Übergangsmetalls, das in der Übergangsmetall-Komponente anwesend ist, oder der Kombination dieses aktiven Prepolymers mit wenigstens einem der Co-Katalysatoren.

28. Verfahren zur Synthese eines olefinischen Polymers oder Copolymers durch in Kontakt bringen ein oder mehrerer Olefine mit einem katalytischen System erhältlich aus der Kombination einer Obergangsmetall-Komponente mit einem Co-Katalysator und gegebenenfalls einem Elektronen-Donor, dadurch gekennzeichnet, daß das verwendete katalytische System dasjenige gemäß einem der Ansprüche 24 bis 27 ist.

29. Verfahren nach Anspruch 28, dadurch gekennzeichnet, daß die Polymerisation in Lösung oder in Suspension in einem inerten flüssigen Milieu durchgeführt wird oder auch in der Masse in wenigstens einem der Olefine, das in flüssigem Zustand gehalten wird.

30. Verfahren nach Anspruch 28, dadurch gekennzeichnet, daß die Polymerisation in der Gasphase ausgeführt wird.

31. Verfahren nach einem der Ansprüche 28 bis 30, dadurch gekennzeichnet, daß das verwendete Olefin oder die verwendeten Olefine ausgewählt werden aus den Mono-Olefinen mit $C_2$ bis $C_{12}$ und insbesondere aus Ethylenpropen, 1-Buten und 1-Hexen.

32. Verfahren nach Anspruch 30, dadurch gekennzeichnet, daß man ein Gemisch aus Ethylen und einem oder mehreren alpha-Olefinen mit $C_3$ bis $C_{12}$, insbesondere Propen, 1-Buten, 1-Hexen, 4-Methyl-1-penten und 1-Octen polymerisiert, wobei dieses Gemisch wenn es in Kontakt mit dem katalytischen System ist ein molares Verhältnis an alpha-Olefinen mit $C_3$ bis $C_{12}$ zwischen 0,1 und 90 % und vorzugsweise zwischen 1 und 60 % enthält.

33. Verfahren nach Anspruch 28, dadurch gekennzeichnet, daß man Ethylen oder ein Gemisch aus Ethylen und einem oder mehreren alpha-Olefinen mit $C_3$ bis $C_{12}$ bei Drücken von 200 bis 3500 bar und Temperaturen von bis zu 350°C in der Masse polymerisiert.

34. Verfahren nach Anspruch 33, dadurch gekennzeichnet, daß diese Polymerisation in der Masse unter Verwendung eines katalytischen Systems gemäß Anspruch 25 durchgeführt wird.

**Claims**

1. Process for the preparation of a transition metal component for a catalyst system for olefin polymerization, in which an organomagnesiumaluminium reaction product is formed by reaction, in a liquid medium, of a monohalogenated, alkylated or alkoxylated magnesium compound with an organoaluminium compound, and the reaction product is then subjected to a chlorination and to a treatment with a compound of a transition metal chosen from Ti, V, Zr and Cr, characterized in that the organoaluminium compound employed is at least one aluminosiloxane derivative of formula

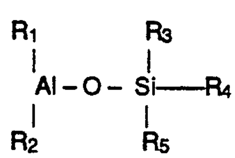

in which $R_1$, $R_2$, $R_3$, $R_4$ and $R_5$, which are identical or different, denote a $C_1$ - $C_{12}$ all radical or hydrogen.

2. Process according to Claim 1, characterized in that the aluminosiloxane derivative is such that, in the formula which defines it, $R_1$, $R_2$, $R_3$, $R_4$ and $R_5$ denote a $C_1$ - $C_6$ alkyl radical.

3. Process according to either of Claims 1 and 2, characterized in that the aluminosiloxane derivative does not contain more than two hydrogen atoms per mole of derivative.

4. Process according to one of Claims 1 to 3, characterized in that the magnesium compound corresponds to the formula $YaMg_mXb$, in which Y denotes a $C_1$ - $C_{12}$, and preferably $C_1$ - $C_8$, alkyl or alkoxy radical, X denoting a radical Y or a halogen atom, and preferably a chlorine atom, m is a number equal to or greater than 1, while a is a number greater than 0 and such that a + b = 2 m.

5. Process according to one of Claims 1 to 4, characterized in that the quantities of the magnesium compound and of the aluminosiloxane derivative used to react are such that the ratio of the number of moles of the magnesium compound to the number of moles of the aluminosiloxane derivative is between 0.1 and 100 and preferably lies between 0.5 and 20.

6. Process according to one of Claims 1 to 5, characterized in that the reaction between the magnesium compound and the aluminosiloxane derivative is carried out at a temperature ranging from -40°C to the boiling point of the liquid reaction medium at atmospheric pressure.

7. Process according to one of Claims 1 to 6, characterized in that the product of reaction between the magnesium compound and the aluminosiloxane derivative is subjected to a chlorination and the product resulting from this chlorination is then treated with the transition metal compound.

8. Process according to one of Claims 1 to 6, characterized in that the product of reaction between the magnesium compound and the aluminosiloxane derivative is treated with the transition metal compound, and the product resulting from this treatment is then subjected to a chlorination.

9. Process according to Claim 7 or 8, characterized in that a porous inorganic or organic support is impregnated with a product of reaction between the magnesium compound and the aluminosiloxane derivative, the said impregnation being carried out either during the formation of the mixture for reaction between the said compounds, or during the reaction, or else when the reaction is finished.

10. Process according to Claim 7, characterized in that the product resulting from the chlorination is dissolved in a solvent, and a porous inorganic or organic support is then impregnated with this solution and the impregnated support is treated with the transition metal compound.

11. Process according to Claim 8, characterized in that a porous inorganic or organic support is impregnated with the reaction mixture originating from the treatment with the transition metal compound before the chlorination.

12. Process according to Claim 7 or 8, characterized in that the product obtained at the end of those of the stages of chlorination and of treatment with the transition metal compound which is the last stage in the process is combined, by cogrinding or by mixing in suspension in an inert liquid, with a porous inorganic or organic support.

13. Process according to Claim 7 or 8, characterized in that the product obtained at the end of those of the stages of chlorination and of treatment with the transition metal compound, which is the last one in the process is dissolved in a solvent and a porous inorganic or organic support is impregnated with the said solution.

14. Process according to one of Claims 9 to 13, characterized in that the support is chosen from the group consisting of $SiO_2$, $TiO_2$, $Al_2O_3$, $ZrO_2$, zeolites and mixed oxides containing $SiO_2$ and one or more metal oxides taken from $ZrO_2$, $TiO_2$, MgO and $Al_2O_3$, and thermoplastic polymers.

15. Process according to one of Claims 7 to 14, characterized in that the chlorination is carried out at a temperature ranging from 0°C to 100°C.

16. Process according to one of Claims 7 to 15, characterized in that the chlorinating agent is such as chlorine, halogenated hydrocarbon, $SOCl_2$, $SiCl_4$, and especially anhydrous HCl.

17. Process according to one of Claims 7 to 16, characterized in that the treatment with the transition metal compound is carried out at a temperature of between -40°C and 200°C and preferably between 0°C and 150°C.

18. Process according to one of Claims 7 to 17, characterized in that the transition metal compound employed for the treatment is chosen from $TiCl_4$, $TiCl_3$, $VCl_4$, $VOCl_3$, $CrCl_3$, $CrO_3$, chromium acetylacetonate, vanadium acetylacetonate and the titanates and zirconates of formulae $Ti(OR)_pCl(4-p)$ and $Zr(OR)_pCl(4-p)$, with R denoting a $C_1$ - $C_8$ alkyl radical and p denoting an integer ranging from 1 to 4.

19. Process according to one of Claims 1 to 18, characterized in that an electron-donor consisting of a Lewis base is used in combination with the transition metal component either at the end of the preparation of the latter or else at any point during the process by which it is obtained, and in particular during the stage of reaction of the magnesium compound with the aluminosiloxane derivative, or at the end of the said stage.

20. Process according to Claim 19, characterized in that the quantity of electron-donor employed is such that the ratio of the number of magnesium atoms of the transition metal component to the number of molecules of electron-donor is between 0.5 and 200 and preferably between 1 and 100.

21. Process according to one of Claims 1 to 18, characterized in that the electron-acceptor consisting of a Lewis acid is used in combination with the transition metal component either at the end of the preparation of the latter or else at any point during the process by which it is obtained, and in particular during the stage of reaction of the magnesium compound with the aluminosiloxane derivative or at the end of the said stage.

22. Process according to Claim 21, characterized in that the quantity of electron-acceptor employed is such that the molar ratio of acceptor to the magnesium of the transition metal component is between 0.01 and 200 and preferably 0.1 to 50.

23. Process according to one of Claims 1 to 22, characterized in that the quantity of the transition metal compound employed is such that the transition metal component contains from 0.01 % to 40 %, and preferably from 0.1 % to 20 %, by weight of transition metal.

24. Catalyst system for olefin polymerization resulting from the combination of a transition metal component with a cocatalyst chosen from the organometallic compounds of metals of groups I to III of the periodic Table of the Elements, and optionally with an electron-donor, characterized in that a transition metal component obtained according to one of Claims 1 to 23 is employed.

25. Catalyst system according to Claim 24, characterized in that the transition metal component and the cocatalyst are used in combination in such proportions that the ratio of the number of atoms of metal of groups I to III of the periodic Table of the Elements originating from the cocatalyst to the number of atoms of transition metal which are present in the said component lies between 0.5 and 1,000 and more particularly between 1 and 400.

26. Catalyst system according to Claim 24 or 25, characterized in that the cocatalyst is chosen from isoprenylaluminium, aluminoxanes, organomagnesium compounds of formula $YaMg_mXb$, organoaluminium compounds of formula $AlR'''_xCl_{(3-x)}$, in which R''' denotes a $C_1$ - $C_8$ alkyl radical and x is a number such that $1 \leq x \leq 3$ and the aluminosiloxane derivatives of formula

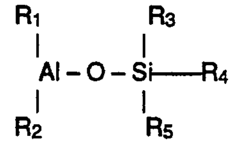

27. Catalyst system according to Claim 26, characterized in that it consists of an active prepolymer obtained by bringing one or more $C_4$ - $C_{12}$ alpha-olefins into contact with a catalyst system resulting from the combination of the transition metal component with one or more of the said cocatalysts, with the use of 2 to 100 moles, and preferably of 2 to 50 moles, of the $C_4$ - $C_{12}$ alpha-olefin or alpha-olefins per gram-atom of transition metal present in the transition metal component, or of the combination of the said active prepolymer with at least one of the said cocatalysts.

28. Process for the synthesis of an olefin polymer or copolymer by bringing one or more olefins into contact with a catalyst system resulting from the combination of a transition metal component with a cocatalyst, and optionally an electron-donor, characterized in that the catalyst system employed is that according to one of Claims 24 to 27.

29. Process according to Claim 28, characterized in that the polymerization is carried out in solution or suspension in an inert liquid medium or else in bulk in at least one of the olefins which is kept in the liquid state.

30. Process according to Claim 28, characterized in that the polymerization is carried out in gaseous phase.

31. Process according to one of Claims 28 to 30, characterized in that the olefin or the olefins employed are chosen from $C_2$ - $C_{12}$ monoolefins, and especially from ethylene, propene, 1-butene and 1-hexene.

32. Process according to Claim 30, characterized in that a mixture of ethylene and of one or more $C_3$ - $C_{12}$ alpha-olefins, especially propene, 1-butene, 1-hexene, 4-methyl-1-pentene and 1-octene, is polymerized, the said mixture containing, when it is in contact with the catalyst system, a molar proportion of $C_3$ - $C_{12}$ alpha-olefins of between 0.1 and 90 %, and preferably between 1 and 60 %.

33. Process according to Claim 28, characterized in that ethylene or a mixture of ethylene and of one or more $C_3$ - $C_{12}$ alpha-olefins is polymerized in bulk at pressures ranging from 200 to 3500 bars and temperatures ranging up to 350°C.

34. Process according to Claim 33, characterized in that the said polymerization in bulk is carried out by making use of the catalyst system according to Claim 25.